# EUROPEAN PATENT SPECIFICATION

(11) **EP 3 554 301 B1**
(45) Date of publication and mention of the grant of the patent: **28.06.2023**
(21) Application number: 17826572.4
(22) Date of filing: 18.12.2017
(51) Int. Cl.: A43B 13/04, C08K 3/34, C08K 3/36, C08L 7/00, C08L 9/00, C08L 9/06, C08L 23/16

(54) **MIXTURE FOR PRODUCING FOOTWEAR SOLES**
MISCHUNG ZUR HERSTELLUNG VON SCHUHSOHLEN
MÉLANGE POUR LA PRODUCTION DE SEMELLES DE CHAUSSURES

(30) Priority: 19.12.2016 IT 201600127907
(43) Date of publication of application: 23.10.2019
(73) Proprietor: Euroinga Group S.P.A., 63821 Porto Sant'Elpidio (FM) (IT)
(72) Inventor: PETTINARI, Gianni, 63900 Fermo (FM) (IT)
(74) Representative: Viganò, Elena
(86) International application number: PCT/IB2017/058043
(87) International publication number: WO 2018/116116

(56) References cited:
- WO-A1-2006/004036
- WO-A1-2008/083451
- WO-A1-2014/004455
- WO-A2-2005/060472
- US-A- 3 938 574
- US-A1- 2008 193 774
- US-B1- 6 335 392

## Description

The present invention refers to a cross-linkable mixture for the production of soles for footwear, and a rubber sole for footwear obtainable by peroxide cross-linking of said mixture, as well as a process for the production of said mixture.

### State of the Art

In the sector of production of rubber soles for footwear, the base materials generally used are natural rubber (NR), a polymeric hydrocarbon material obtained from the extraction of latex from certain plants, synthetic rubber, a polymeric material obtained chemically of which there are more than thirty types used in a wide variety of technical fields, and additives of various nature such as, for example, accelerators, anti-ageing compounds, and activators.

With reference to the state of the art for the production of soles for footwear, the rubbers typically used are obtained by cross-linking a mixture comprising a polymeric base product, accelerators, anti-ageing compounds, activators, fillers, dyes, plasticizers and retardants. In particular, the main types of polymers used for making the state of the art polymeric base product are natural rubber (NR) and synthetic rubbers, such as styrene-butadiene (SBR) and acrylonitrile-butadiene (NBR). In addition, in the state of the art rubbers, also other types of polymers may be used in smaller amounts in the production of the base product, such as for example emulsions of styrene-butadiene (E-SBR), polybutadiene (PBR), polybutyl (IIR), ethylene-propylene (EPM).

Generally, to produce the final rubber, the mixture is subjected to a vulcanization process; in particular, the state of the art vulcanizing agent is sulfur.

Vulcanization causes a modification of the molecular conformation of the polymer through the formation of transverse bonds between the sulfur atoms and the various chains of the rubber. The vulcanization of the rubber may be carried out using different methods: most frequently while hot, maintaining the rubber at a temperature of 160-175 °C after incorporation of the sulfur.

WO 2008/083451 A1 shows a cross-linkable mixture for producing footwear soles, comprising:i) an EPDM terpolymer, in an amount ranging from 2% to 30% by weight with respect to the total weight of the mixture ii) a blend of natural and synthetic rubbers, in an amount ranging from 10% to 40% by weight with respect to the total weight of the mixture; iii) at least a filler, in an amount ranging from 6% to 60% by weight with respect to the total weight of the mixture; and iv) a peroxide cross-linking system, in an amount ranging from 0% to 6% by weight with respect to the total weight of the mixture.

The inventors of the present invention have found that the rubbers currently in use for making soles are quite heavy, wear out, age aesthetically (for example they turn yellow and crystallize) and release substances and/or powders that can damage the environment.

The problem at the base of the present invention is that of overcoming the disadvantages indicated above conferring, thereby, to the final product an improved stability and abrasion resistance, improved elasticity, and lower specific weight.

### Definitions

Unless otherwise defined, all terms of art, notations and other scientific terminology used herein are intended to have the meanings commonly understood by those of skill in the art to which this disclosure pertains. In some cases, terms with commonly understood meanings are defined herein for clarity and/or for ready reference; thus, the inclusion of such definitions herein should not be construed to represent a substantial difference over what is generally understood in the art.

Within the framework of the present description and in the subsequent claims, except where otherwise indicated, all numbers expressing amounts, quantities, percentages, and so forth, are to be understood as being preceded in all instances by the term "about". Also, all ranges of numerical entities include all the possible combinations of the maximum and minimum numerical values and all the possible intermediate ranges therein, in addition to those specifically indicated hereafter.

By the term EPDM (ethylene-propylene-diene) terpolymer is meant an elastomer with an ethylene content between 45 and 75% obtained by the copolymerization of ethylene, propylene, and a third monomer represented by a diene. Commonly used dienes are dicyclopentadiene (DCPD), ethylidene norbornene (ENB), and vinyl norbornene (VNB).

By the term natural rubber (NR) is meant a polymeric hydrocarbon material obtained from the extraction of latex from certain plants.

Instead, by the term synthetic rubber is meant a type of rubber obtained by a process of copolymerization.

By the term IR is meant polyisoprene, with SBR styrene-butadiene, with HBR high-butadiene, with NBR butadiene acrylonitrile, with IIR isobutene isoprene, and with PBR polybutadiene butadiene.

By the term filler is meant a reinforcing filler.

By the term vulcanization is meant a process for cross-linking at high temperature by use of a cross-linking system consisting of a vulcanizing agent/activator and an accelerator.

By the term vulcanizing agent/activator is meant a substance that forms chemical bonds between the chains of molecules comprising the rubber creating a stable network, for example peroxide and sulfur.

By the term accelerator is meant a substance that increases the efficacy of the vulcanizing agents/activators in the process of vulcanization, thus reducing the length of the process and the operating temperature, for example thiurams, thiazoles and guanidine.

By the term peroxide cross-linking system is meant a cross-linking system comprising as primary vulcanizing agent a peroxide of organic type, such as VULCUP MB40, and a cross-linking activator, such as for example stearic acid, silane and peg.

By the term anti-ageing agent is meant an additive that guarantees ageing resistance.

By the term dye is meant a pigment, generally of organic type, that serves to dye the mixture. By the term plasticizer, are meant polyplastols which are substances that increase the distribution of the fillers, plasticity, flexibility, workability, and elasticity at low temperature. By the term retardant is meant a substance that limits the vulcanization.

By the term closed mixer is meant a machine for working rubber consisting of a closed mixing chamber and a pair of interpenetrating tangential rotors.

By the term open mixer is meant a machine for working rubber consisting of a pair of cylinders rotating in opposite directions.

### Description of the Invention

A first aspect of the invention relates to a cross-linkable mixture for producing soles for footwear comprising:
i) an EPDM terpolymer, in an amount ranging from 50% to 85% by weight with respect to the total weight of the mixture,
ii) a blend of natural or synthetic rubbers, in an amount ranging from 3% to 40% by weight with respect to the total weight of the mixture,
iii) at least one filler, in an amount ranging from 5% to 25% by weight with respect to the total weight of the mixture,
iv) a peroxide cross-linking system, in an amount ranging from 0.5% to 5% by weight with respect to the total weight of the mixture.

In the sector of the production of rubber soles for footwear, EPDM terpolymers are not used except in very small percentages. In the present invention, surprisingly, the inventors use an EPDM terpolymer as the main component of the polymeric base of the mixture.

The main properties of EPDM are its remarkable resistance to heat, low temperatures, ozone, atmospheric agents, polar substances, and steam. In addition, the EPDM terpolymer has excellent electrical insulation properties.

According to the present invention, the EPDM terpolymer is present in an amount ranging from 50% to 85% by weight with respect to the total weight of the mixture. Preferably, in an amount ranging from 55% to 75%.

Preferred examples of the EDPM terpolymer that may be used in the present invention, and which are commercially available, are the products KEP ^{®} and DUTRAL ^{®}, preferably KEP 570F ^{®} and DUTRAL TER ^{®}.

According to the present invention, the mixture of natural and synthetic rubbers is present in an amount ranging from 3% to 40% by weight with respect to the total weight of the mixture. Preferably, in an amount ranging from 5% to 35%; more preferably from 8% to 28%.

In a preferred embodiment, the mixture of natural and synthetic rubbers comprises one or more rubbers selected from the group comprising NR, IR, SBR, IIR, HBR, NBR, and PBR.

NR rubber has excellent properties of elasticity, shear and tear resistance, and exceptional elongation to break. IR rubber is a synthetic rubber with characteristics similar to those of natural rubber (NR). SBR rubber has excellent workability properties, and it is sufficiently economical. IIR rubber is characterized by excellent dielectric resistance. HBR rubber is characterized by excellent properties of resistance to abrasion and permanent deformation. NBR rubber has excellent resistance to oils and ageing. PBR rubber is characterized by good resistance to abrasion and excellent elasticity. Preferred examples of natural rubbers that may be used in the present invention, and which are commercially available, are the products SIR-CV50 and 60 ^{®}, preferably SIR-CV60 ^{®}.

Preferred examples of SBR that may be used in the present invention, and which are commercially available, are the products 1739-1778^{®}, 1783-1502^{®} and 1502F-1205^{®}, preferably 1205-1739-1502-1502F^{®}.

Preferred examples of HBR that may be used in the present invention, and which are commercially available, are the products 1821^{®},1823^{®} and 1815^{®}, preferably 1815^{®}. Preferred examples of PBR that may be used in the present invention, and which are commercially available, are the products SKI-3S^{®} and KBR 01^{®}, preferably KBR 01^{®}. According to the present invention, the filler is present in an amount ranging from 5% to 25% by weight with respect to the total weight of the mixture. Preferably, in an amount ranging from 7% to 20%.

Examples of filler are carbon black and silicon dioxide, preferably silicon dioxide.

The inventors have advantageously noticed that using silicon dioxide, the resistance to traction, elongation and Shore-A hardness increase.

According to the present invention, the peroxide cross-linking system is present in the mixture in an amount ranging from 0.5% to 5% by weight with respect to the total weight of the mixture. Preferably, in an amount ranging from 1% to 3%.

A preferred example of a peroxide cross-linking system that may be used in the present invention, and which is commercially available, is VUL CUP 40 MB and a mixture of activators. Commonly used activators are, for example, STEARIC ACID, SILANE, and PEG 4000.

Advantageously, with the peroxide cross-linking blend, cross-linking of both the terpolymer and the natural and synthetic rubber mixture is obtained simultaneously.

Usually, in the state of the art, sulfur is used as the cross-linking reagent. The inventors of the present invention have advantageously found that the use of a peroxide cross-linking system allows a faster cross-linking, thus lowering the time for vulcanization.

According to a preferred embodiment, the mixture comprises, in addition to the ingredients mentioned above, at least one additive selected from the group comprising anti-ageing compounds, dyes, plasticizers and activators.

Preferably, at least one additive is used in an amount ranging from 0.1% to 10% by weight with respect to the total weight of the mixture, more preferably from 0.3% to 7%.

Preferred examples of anti-ageing compounds that may be used in the present invention, and which are commercially available, are the products VULCANOX DS/F and EVTNOX. Preferred examples of dyes that may be used in the present invention, and which are commercially available, are the products RENOL-PV, MADRI COLORE, MASTERBACH, natural pigments based on TITANIUM and IRON OXIDE.

Preferred examples of plasticizers that may be used in the present invention, and which are commercially available, are the products C9 RESIN and POLYPLASTOL.

Preferred examples of activators that may be used in the present invention, and which are commercially available, are the products SILANE and EVICURE.

Preferred examples of additives that may be used in the present invention, and which are commercially available, are the products HANSA DIS T4^{®}, PEG 4000^{®}, STEARIC ACID^{®}, ZINC CARBOXIDE^{®}, preferably PEG 4000^{®}, ZINC CARBOXIDE^{®}.

Differently from the mixtures for rubber soles used according to the known art, in the mixture according to the present invention the amounts of additives, such as retardants, have been advantageously reduced to zero, and the presence of anti-ageing compounds is reduced to a minimum.

Surprisingly, the inventors have found that the rubber soles obtained according to the mixture of the present invention present remarkable advantages with respect to the known art.

In the first place, the new mixture confers improved stability and resistance to the product. Secondly, there is a reduction in the amount of products used and, consequently, a reduction in the preparation times, costs, and a reduction in movement/waste.

A second aspect of the present invention relates to a sole for footwear obtainable by peroxide cross-linking of the mixture according to a preferred embodiment of the mixture previously mentioned.

A third aspect of the present invention relates to a process for the production of a cross-linkable mixture by any of the methods illustrated above comprising the steps of:
- mixing in at least a first mixer at least the following components of a first mixture: an EPDM terpolymer, a blend of natural and synthetic rubbers, and at least one filler;
- mixing in at least a second mixer said first mixture and a peroxide cross-linking system.

In a preferred embodiment, the first mixing step of the mixture is carried out in at least one closed mixer.

In a further preferred embodiment, the second mixing step of the mixture is carried out in at least one open mixer.

Generally, said closed mixers comprise a pair of interpenetrating or tangential rotors. Generally, said closed mixers comprise a mixing chamber inside which is seated a pair of rotors which rotate in opposite directions in such a way as to mix the components introduced into the mixing chamber from its top.

To this end, said mixers are generally provided with a pneumatic or hydraulic cylinder arranged in the upper part of the mixing chamber and a piston that moves both upwards to open the mixing chamber, allowing the introduction of the ingredients of the mixture from suitable loading hoppers, and downwards to exert a pressure on the material being processed in the mixing chamber and located above the pair of rotors. A pneumatic or hydraulic system positioned on the bottom of the mixing chamber allows the mixture to be discharged at the end of the mixing cycle through the opening of a suitable nosepiece.

Specific examples of mixers that can be advantageously used according to the present invention are of the closed type (Banbury^{®}, Intermix^{®}) or open type (cylinder, open mill or Z-blade).

According to the preferred embodiment, the mixing using said first mixer is carried out at a rotor speed between 15 rpm and 45 rpm. Preferably, at a rotor speed between 22 and 38 rpm. According to the preferred embodiment, the mixing using said second mixer is carried out at a rotor speed between 10 rpm and 20 rpm. Preferably, at a rotor speed between 13 and 17 rpm. According to a preferred embodiment, said first mixing step is carried out at a temperature of the material being processed between 50°C and 150°C.

According to a preferred embodiment, said second mixing step is carried out at a temperature of the material being processed between 85°C and 110°C.

Finally, in its fourth aspect, the present invention relates more in particular to a process for producing a sole for footwear comprising the steps of:
- producing a cross-linkable mixture according to the aspects described above;
- subjecting this mixture to molding and vulcanization, preferably at a temperature between 160°C and 190°C, in order to obtain a finished sole.

### EXAMPLE 1 (mixture according to the invention).

A mixture was produced according to the composition and process of the present invention. The EPDM rubber and other pieces of rubber (SBR, HBR,NBR,IIR or NR) are added to the mixing chamber of the closed mixer together with the additives, the dye, the plasticizer (POLYPLASTOL) and the filler (silicon dioxide). After the first mixing, which takes place at a temperature between 50° and 150°, for a time from about 4 to 8 minutes, and at a rotation speed between 22 and 38 rpm, the preparation is transferred to the open mixer where the mixture of peroxide, activators and additives is added. The second mixing takes place at a temperature between 85° and 110°, for a time from 4 to 7 minutes, and with a rotation speed between 13 and 17 rpm. In this second step, the preparation is transformed into a roll which is subsequently inserted into an extruder, and then into a preforming machine which gives it form and weight. The product thus formed is inserted into metal molds positioned on machines heated to high temperature, presses, where it is submitted to the process of vulcanization/cross-linking at a temperature between 140° and 190°, for a time from 5 to 20 minutes. In particular, the mixture according to the invention was prepared using the recipe reported in Table 1 below.

**Table 1**

| **COMPONENT** | **WEIGHT IN Kg** | **% IN MIXTURE** |
|---|---|---|
| EPDM | 52 | 65.8 |
| E-SBR | 8 | 10.1 |
| H | 3 | 3.8 |
| NR | 2 | 2.5 |
| ACCELERATOR | 1.05 | 1.35 |
| ANTI-AGEING COMPOUND | - | 0 |
| ACTIVATOR | 0.6 | 0.75 |
| FILLER | 9 | 11.4 |
| DYE | 3 | 3.8 |
| PLASTICIZER | 0.4 | 0.5 |
| RETARDANT | - | 0 |
| **TOTAL** | 79.05 | 100% |

### EXAMPLE 2 (Reference mixture)

A mixture named STANDARD was produced according to a traditional production process. In the first place, the process of primary mixing is carried out using a machine, a closed mixer, wherein all the materials, from the rubber to the additives and sulfur, are added and mixed with a crushing action between two shaped rotors, characterized by a rotation speed of about 32 rpm. This process has a duration ranging from about 4 to 8 minutes, and takes place at a temperature between 50 and 1 50°C. In the second place, the process of secondary mixing takes place in a machine, an open mixer, wherein the preparation from the closed mixer is added and remixed with a friction action between two perfectly smooth cylinders that rotate at a speed of 13 rpm. The processing has a duration ranging from 4 to 10 minutes, and takes place at a temperature of about 90°C. Following the mixing process, strips and/or rolls are formed that will be transferred to the extruder, where preshaped measured pieces of rubber are obtained. These preshaped pieces are cooled to a temperature of 15°C, for example by passing them in water, ready to be submitted to the vulcanization process. The vulcanization process takes place at a temperature between 140 and 175°C, and for a duration from 6 to 15 minutes. Said STANDARD reference mixture was prepared using the recipe reported in Table 2

**Table 2**

| **COMPONENT** | **WEIGHT IN Kg** | **% IN MIXTURE** |
|---|---|---|
| SBR | 38 | 48.2 |
| E-SBR | 8 | 10.2 |
| HBR 01 | 4 | 5.1 |
| NR | 2 | 2.54 |
| ACCELERATOR | 1.65 | 2.09 |
| ANTI-AGEING COMPOUND | 0.6 | 0.76 |
| ACTIVATOR | 2.65 | 3.36 |
| FILLER | 18 | 22.9 |
| DYE | 3 | 3.8 |
| PLASTICIZER | 0.35 | 0.44 |
| RETARDANT | 0.52 | 0.66 |
| **TOTAL** | 78.77 | 100% |

### Characterization of the physicochemical properties of the standard mixture and according to the invention.

The rubbers of examples 1 and 2 were submitted to characterization of their physicochemical properties.

The analysis carried out on the two mixtures were performed according to standard protocols:
- Hardness, method ASTM D 2240, Shore/A and IRHD
- Abrasion Resistance, method DIN 53516 - mm³
- Breaking load, method - kg/cm²
- Elongation at break, method ASTM D 412C - %
- Tear resistance, method ASTM D 624B - Kg/cm

The results are summarized in Table 3 reported hereinbelow.

**Table 3**

| **Characteristics** | **STANDARD Mixture** | **INVENTION Mixture** |
|---|---|---|
| **Hardness** | From ≥ 45 to ≤ 95 Shore | From ≥ 45 to ≤ 95 Shore |
| **Specific Weight** | From ≥ 0.98 to ≥ 1.15 gr/cm3 | **From ≥ 0.65 to ≤ 0.98 gr/cm³** |
| **Abrasion Resistance** | From ≥ 0135 gr/mm3 | **From ≥ 65 to ≤ 95 gr/mm³** |
| **Breaking load** | From ≥ 10 M/pa | From ≥ 10 M/pa |
| **Elongation at break** | From ≥ 350 % | From ≥ 350 % |
| **Tear Resistance** | From ≥ 25 N/mm | From ≥ 20 N/mm |
| **Resistance to Ageing and Atmospheric Agents** | discreet | **excellent** |

It is apparent from the comparative Table 3 that:
1) The weight of the rubber obtained according to the invention is 18.5% lighter with respect to the standard reference mixture;
2) The abrasion resistance is greatly improved with respect to the standard reference mixture;
3) The resistance to ageing and atmospheric agents results to be improved thanks to the use of the EPDM terpolymer as base of the mixture. In addition, in the rubber obtained by the method of the invention the yellowing of the white color is drastically reduced.

In particular, Table 3 shows that the mixture obtained according to the process of the invention (example 1) has the following advantages:
1. Better stability and resistance;
2. A significant reduction in the quantity of products, and consequent reduction in preparation times, costs, and reduction in movement/waste;
3. A significant reduction in the amount of silica, and consequent reduction in preparation times, costs, and reduction in movement/waste;
4. Complete absence of RETARDANT with consequent reduction in preparation times, costs, and reduction in movement/waste.

This produces a final result in which the physicochemical characteristics of the product obtained are significantly better than the STANDARD mixture.

## Claims

1. A cross-linkable mixture for producing soles for footwear, comprising:
i) an EPDM terpolymer, in an amount ranging from 50% to 85% by weight with respect to the total weight of the mixture;
ii) a blend of natural and synthetic rubbers, in an amount ranging from 3% to 40% by weight with respect to the total weight of the mixture;
iii) at least one filler, in an amount ranging from 5% to 25% by weight with respect to the total weight of the mixture; and
iv) a peroxide cross-linking system, in an amount ranging from 0.5% to 5% by weight with respect to the total weight of the mixture.

2. Mixture according to claim 1, wherein said EPDM terpolymer is in an amount ranging from 55% to 75% by weight with respect to the total weight of the mixture; and wherein said blend of natural and synthetic rubbers is in an amount ranging from 5% to 35% by weight with respect to the total weight of the mixture, preferably from 8% to 28%.

3. Mixture according to any one of claims 1-2, wherein said blend of natural and synthetic rubbers comprises one or more rubbers selected from the group consisting of NR, IR, SBR, IIR, HBR, NBR and PBR.

4. Mixture according to any one of claims 1-3, wherein said filler is silicon dioxide, in an amount preferably ranging from 7% to 20% by weight with respect to the total weight of the mixture.

5. Mixture according to any one of claims 1-4, wherein said peroxide cross-linking system is in an amount preferably ranging from 1% to 3% by weight with respect to the total weight of the mixture.

6. Mixture according to any one of claims 1-5, further comprising at least one additive in an amount ranging from 0.1% to 10% by weight with respect to the total weight of the mixture; preferably from 0.3% to 7%.

7. Mixture according to any one of claims 1-6, wherein said at least one additive is selected from the group comprising anti-ageing, dyes, activators and plasticizers.

8. Sole for footwear obtainable by peroxide cross-linking of the mixture according to any one of claims 1-7.

9. Process for producing a cross-linkable mixture according to any one of claims 1-7, comprising:
- mixing in at least a first mixer at least the following components of a first mixture: an EPDM terpolymer, a blend of natural and synthetic rubbers and at least one filler;
- mixing in at least a second mixer said first mixture and a peroxide cross-linking system.

10. Process according to claim 9, wherein said first mixing step is carried out at a temperature between 50°C and 150°C; and/or said second mixing step is carried out at a temperature comprised between 85°C and 110°C.

11. Process according to claims 9-10, wherein said first mixing step is carried out at a rotation speed of the mixer between 15 and 45 rpm, preferably between 22 and 38 rpm; and/or said second mixing step is carried out at a rotation speed of the mixer between 10 and 20 rpm, preferably 13 to 17 rpm.

12. Process for producing a sole for footwear comprising the steps of:
- producing a cross-linkable mixture according to any one of claims 9-11;
- molding and vulcanizing the mixture, preferably at a temperature comprised between 160°C and 190°C, in order to obtain a finished sole.

## Patentansprüche

1. Vernetzbare Mischung zur Herstellung von Sohlen für Schuhwerk, umfassend:
i) ein EPDM-Terpolymer in einer Menge im Bereich von 50 bis 85 Gew.-%, bezogen auf das Gesamtgewicht der Mischung,
ii) eine Femisch aus Natur- und Synthesekautschuk in einer Menge von 3 bis 40 Gew.-%, bezogen auf das Gesamtgewicht der Mischung,
iii) mindestens einen Füllstoff in einer Menge von 5 bis 25 Gew.-%, bezogen auf das Gesamtgewicht der Mischung, und
iv) ein Peroxid-Vernetzungssystem in einer Menge im Bereich von 0,5 bis 5 Gew.-%, bezogen auf das Gesamtgewicht der Mischung.

2. Mischung nach Anspruch 1, wobei das EPDM-Terpolymer in einer Menge im Bereich von 55 bis 75 Gew.-%, bezogen auf das Gesamtgewicht der Mischung, vorliegt; und wobei das Gemisch aus Natur- und Synthesekautschuk in einer Menge im Bereich von 5 bis 35 Gew.-%, bezogen auf das Gesamtgewicht der Mischung, vorzugsweise von 8 bis 28 %, vorliegt.

3. Mischung nach einem der Ansprüche 1 bis 3, wobei das Gemisch aus natürlichem und synthetischem Kautschuk einen oder mehrere Kautschuke umfasst, ausgewählt aus der Gruppe bestehend aus NR, IR, SBR, IIR, HBR, NBR und PBR.

4. Mischung nach einem der Ansprüche 1 bis 3, wobei der Füllstoff Siliziumdioxid ist, vorzugsweise in einer Menge von 7 bis 20 Gew.-%, bezogen auf das Gesamtgewicht der Mischung.

5. Mischung nach einem der Ansprüche 1 bis 4, wobei das Peroxid-Vernetzungssystem in einer Menge vorzugsweise im Bereich von 1 bis 3 Gew.-%, bezogen auf das Gesamtgewicht des Gemischs, vorliegt.

6. Mischung nach einem der Ansprüche 1-5, die weiter mindestens ein Additiv in einer Menge von 0,1 bis 10 Gew.-%, bezogen auf das Gesamtgewicht der Mischung, vorzugsweise von 0,3 bis 7 %, enthält.

7. Mischung nach einem der Ansprüche 1-6, wobei das mindestens eine Additiv ausgewählt ist aus der Gruppe umfassend Anti-Aging-Mittel, Farbstoffe, Aktivatoren und Weichmacher.

8. Sohle für Schuhwerk, erhältlich durch Vernetzen der Mischung nach einem der Ansprüche 1-7 mittels Peroxid.

9. Verfahren zur Herstellung einer vernetzbaren Mischung nach einem der Ansprüche 1-7, umfassend:
Mischen in mindestens einem ersten Mischer mindestens der folgenden Komponenten einer ersten Mischung: ein EPDM-Terpolymer, ein Gemisch aus natürlichem und synthetischem Kautschuk und mindestens einen Füllstoff;
Mischen der ersten Mischung und eines Peroxid-Vernetzungssystems in mindestens einem zweiten Mischer.

10. Verfahren nach Anspruch 9, wobei der erste Mischschritt bei einer Temperatur zwischen 50°C und 150°C durchgeführt wird; und/oder wobei der zweite Mischschritt bei einer Temperatur zwischen 85°C und 110°C durchgeführt wird.

11. Verfahren nach Anspruch 9-10, wobei der erste Mischschritt bei einer Rotationsgeschwindigkeit des Mischers zwischen 15 und 45 U/min, vorzugsweise zwischen 22 und 38 U/min durchgeführt wird; und/oder wobei der zweite Mischschritt bei einer Rotationsgeschwindigkeit des Mischers zwischen 10 und 20 U/min, vorzugsweise 13 bis 17 U/min, durchgeführt wird.

12. Verfahren zur Herstellung einer Sohle für Schuhwerk, umfassend die Schritte: Herstellen einer vernetzbaren Mischung nach einem der Ansprüche 9-11;
Formen und Vulkanisieren der Mischung, vorzugsweise bei einer Temperatur zwischen 160°C und 190°C, um eine fertige Sohle zu erhalten.

## Revendications

1. Mélange réticulable pour la fabrication de semelles pour chaussures, comprenant :
i) un terpolymère EPDM, en une quantité dans la plage de 50 % à 85 % en poids par rapport au poids total du mélange ;
ii) un mélange de caoutchoucs naturel et synthétique, en une quantité dans la plage de 3 % à 40 % en poids par rapport au poids total du mélange ;
iii) au moins une charge, en une quantité dans la plage de 5 % à 25 % en poids par rapport au poids total du mélange ; et
iv) un système de réticulation à base de peroxyde, en une quantité dans la plage de 0,5 % à 5 % en poids par rapport au poids total du mélange.

2. Mélange selon la revendication 1, dans lequel ledit terpolymère EPDM est en une quantité dans la plage de 55 % à 75 % en poids par rapport au poids total du mélange ; et dans lequel ledit mélange de caoutchoucs naturel et synthétique est en une quantité dans la plage de 5 % à 35 % en poids par rapport au poids total du mélange, de préférence de 8 % à 28 %.

3. Mélange selon l'une quelconque des revendications 1 à 2, dans lequel ledit mélange de caoutchoucs naturels et synthétiques comprend un ou plusieurs caoutchoucs choisis dans le groupe constitué de NR, IR, SBR, IIR, HBR, NBR et PBR.

4. Mélange selon l'une quelconque des revendications 1 à 3, dans lequel ladite charge est le dioxyde de silicium, en une quantité de préférence dans la plage de 7 % à 20 % en poids par rapport au poids total du mélange.

5. Mélange selon l'une quelconque des revendications 1 à 4, dans lequel ledit système de réticulation à base de peroxyde est en une quantité de préférence dans la plage de 1 % à 3 % en poids par rapport au poids total du mélange.

6. Mélange selon l'une quelconque des revendications 1 à 5, comprenant en outre au moins un additif en une quantité dans la plage de 0,1 % à 10 % en poids par rapport au poids total du mélange ; de préférence de 0,3 % à 7 %.

7. Mélange selon l'une quelconque des revendications 1 à 6, dans lequel ledit au moins un additif est choisi dans le groupe comprenant des agents antivieillissement, des colorants, des activateurs et des plastifiants.

8. Semelle pour chaussure pouvant être obtenue par réticulation par le peroxyde du mélange selon l'une quelconque des revendications 1 à 7.

9. Procédé de fabrication d'un mélange réticulable selon l'une quelconque des revendications 1 à 7, comprenant :
- le mélange dans au moins un premier mélangeur d'au moins les composants suivants d'un premier mélange : un terpolymère EPDM, un mélange de caoutchoucs naturel et synthétique et au moins une charge ;
- le mélange dans au moins un deuxième mélangeur dudit premier mélange et d'un système de réticulation à base de peroxyde.

10. Procédé selon la revendication 9, dans lequel ladite première étape de mélange est conduite à une température comprise entre 50 °C et 150 °C ; et/ou ladite deuxième étape de mélange est conduite à une température comprise entre 85 °C et 110 °C.

11. Procédé selon les revendications 9 à 10, dans lequel ladite première étape de mélange est conduite à une vitesse de rotation du mélangeur comprise entre 15 et 45 tr/min, de préférence entre 22 et 38 tr/min ; et/ou ladite deuxième étape de mélange est conduite à une vitesse de rotation du mélangeur comprise entre 10 et 20 tr/min, de préférence de 13 à 17 tr/min.

12. Procédé de fabrication d'une semelle pour chaussure comprenant les étapes de :
- fabrication d'un mélange réticulable selon l'une quelconque des revendications 9 à 11 ;
- moulage et vulcanisation du mélange, de préférence à une température comprise entre 160 °C et 190 °C, afin d'obtenir une semelle finie.
